Europäisches Patentamt

European Patent Office

Office européen des brevets

(11) Publication number: 0 518 180 A2

# EUROPEAN PATENT APPLICATION

(21) Application number: 92109268.0

(22) Date of filing: 02.06.92

(51) Int. Cl.5: B65H 31/18, B65G 57/11,
B65G 17/34

(30) Priority: 14.06.91 IT MI911642

(43) Date of publication of application:
16.12.92 Bulletin 92/51

(84) Designated Contracting States:
AT BE CH DE DK ES FR GB GR LI LU MC NL
PT SE

(71) Applicant: Canziani, Francesco
Via Contardo Ferrini 21
I-21010 San Macario (Varese)(IT)

(72) Inventor: Canziani, Francesco
Via Contardo Ferrini 21
I-21010 San Macario (Varese)(IT)

(74) Representative: La Ciura, Salvatore
c/o STUDIO D'ORIO Via F. Sforza, 3
I-20122 Milan(IT)

(54) Device for collecting and stacking objects delivered by a sorting equipment and sorting equipment comprising these devices.

(57) The invention relates to devices for collecting and stacking objects by a sorting equipment, said device comprising an inclined tray on to which the objects are delivered, provided with two stopping walls, against which the objects which are delivered arrange themselves, one on top of the other.

Means to check the height reached by the pile and means to give the command for the tray to be lowered as a function of the height reached are provided.

FIG.1

This invention proposes collecting devices capable of receiving and stacking objects such as basically flat packages, magazines or similar objects, delivered by a sorting machine.

The invention is characterised by the particular conformation of the parts such as to increase the praticality of use of this type of equipment, being particularly suitable in all those cases, such as for example magazine editorial offices or in large postal sales organisations, in which numerous objects have to be sent to preassigned sorting stations and stacked in such a way as to facilitate subsequent packaging and make it more rapid.

The problem presents itself, in particular, when basically two-dimensional objects such as magazines, packets or thin parcels have to be sorted and then stacked for the next stage of boxing.

Sorting equipment for which sorting devices according to this invention are provided for are already known and described, for example in patents GB no. 2,111,933 and USA no. 4,399,900 of the same applicant.

Since these are equipments comprising several transport planes conveyed along a fixed path, they can be constituted by rotating mats actuated to move at right angles to the forward direction to deliver the object, or tipper plates or some other known system.

The object, coded when they are introduced into the machine, are delivered to several collecting devices, contituted by hoppers or similar devices located along the route.

However, the objects are delivered in bulk and they must be stacked at the moment of boxing, so that they can be arranged in a given order.

The scope of this invention is to provide devices which can effect this operation and thus eliminate the need for further manual intervention on the objects.

In addition to increasing the efficiency of the operators who receive the objects at the outlets of the sorting machine, the equipment according to this invention also avoids damaging the objects which are handled, especially when these are fragile or, for example, in the case of expensive books, have aesthetic qualities of some importance.

This is the case, for example, of books which are handled in bulk without any protective packaging but must still reach the distribution outlet in excellent condition, without damaged or creased covers, so that they can be displayed for sale.

The invention also relates to a particular conformation of the containers for boxing these products, implemented in such a way as to be able to deliver the objects, stacked, directly into the final container which can then be closed for shipping.

This invention will now be described with reference to the annexed figures in which:

figure 1 shows a schematic of the collecting devices in an equipment according to this invention;

figure 2 is the front view of a container to be used with the devices according to this invention.

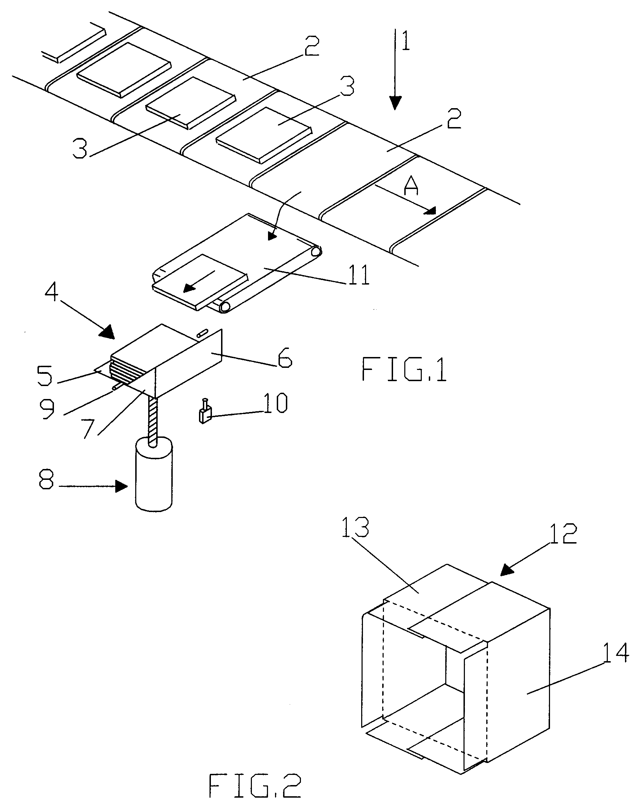

With reference to figure 1, 1 indicates a sorting machine constituted by a number of trolleys not shown, each of which is provided with a rotating mat 2 which constitutes the transport plane onto which the objects to be sorted 3 are deposited in a loading and coding station.

While, in the description, the case of a sorting machine with rotating mats is referred to by way of example, it is clear that the solution can also be validly applied to other types of sorters, for example of the type with tipping plates or with pushers etc.

These objects are delivered between collecting devices, one of which is illustrated in the drawings, indicated globally by 4.

Each of these devices is constituted by a tray 5 on which the objects are deposited, delimited on each side by two stopping walls, indicated by 6 and 7 respectively.

Wall 6 is located at the edge of the tray 5 downstream, in other words in the direction in which the sorting machine moves forward, while wall 7 is located on the edge furthest away from the sorting machine.

The tray 5 is slightly inclined downwards in the direction of walls 6 and 7 and the latter stop and hold in place the objects delivered onto the tray 5.

Both the tray 5 and the walls 6 and 7 can be adjusted, in other words can be moved and locked into different positions, in a known way, so that the geometry of the tray of the stacker can be modified to change the dimensions and the inclination.

This permits the stacker to meet the changing requirements of the user, which can change not only during the various working stages but also over time (for example, in a few years' time there can be significant changes in the typical dimensions of books).

The tray 5 is mobile and is raised and lowered by an actuator of a known type, the unit being indicated by the number 8, which can be constituted, for example, by a pneumatic or hydraulic piston and a motor with a threaded shaft or similar.

This actuator is controlled by electronic devices of a known kind, on the basis of signals from a photoelectric cell 9 located in correspondence to the tray 5 when this is at the top of the limit switch position.

The limits of the movements of the tray are limited by a pair of limit microswitches, one of which is shown in the drawing, marked as number 10.

An intermediate mat 11, maintained in constant motion, is installed between each of the collecting devices and the sorting machine.

This mat fulfils a precise function, that of adjusting the unloading of different objects. In the case of books for example, there would be shifts during the stage the objects enter the stacker if these were delivered directly into the stacker.

This happens because the trajectory of the objects during the fall from the sorting machine varies, depending on the weight and dimensions of the object and the coefficient of attrition of the conveyor surface etc.

Thus, books of different shapes or with different surface characteristics would behave differently and the efficiency of the equipment would be reduced.

However, thanks to the mat 11, they are all delivered to the stacker in a uniform manner.

Preferably, both the speed and the inclination of the mat 11 can be varied as a function of the type of objects being sorted, their characteristics, the depth of the box positioned on the stacker etc.

The speed and inclination can be regulated in known ways, even when the machine is in operation, to better adjust them to the type of object being delivered.

Operation takes place in the following way: in the loading station, each of the objects 3 to be sorted is assigned to a given mat 2 by appropriate coding operations controlled, in a known way, by a central computer which manages the whole of the equipment.

When each trolley passes the selected sorting area, the delivery devices are actuated, directing the object onto the intermediate mat 11.

The trolleys with mats 2 proceed on their path, while the mat 11 discharges the object on to the tray 5.

This is slightly inclined, so the object slides down, finishing against the stopping walls 6 and 7.

The photoelectric cell 9 is obscured by the object present on the tray and gives the signal of consent for the control devices to actuate the actuator 8, lowering the tray 5 until the field of the photoelectric cell 9 is cleared.

The next object is then deposited on the previous one and so on, stacking the objects which have been discharged against the stopping walls 6 and 7.

Each time a new object is unloaded, the tray 5 drops and interferes with the limit microswitch 10 which supplies a signal which indicates that the collecting device has been filled.

The objects, already stacked, can now be removed and the tray 5 returned to its starting position, ready to accept a new series of articles from the sorting machine.

The final container can even be placed on the tray 5, for example of the type illustrated in figure 2.

The latter consists of a box or container 12 in cardboard or a similar material, made up of two parts 13 and 14 which slide into one another, in order to form the complete box 12.

Thus the parts of the box, inserted one into the other, can be placed on the tray so that the sorted objects are automatically arranged inside, already stacked.

When filling has been completed, the parts 13 and 14 are brought together to form the final box already filled with the objects, correctly arranged and ready for closing.

The box can also consist of a container with walls folded in accordion folds, so that they can be pulled around the stacked objects, once the box is full.

The use of a variable geometry box permits its dimensions to be adapted to the dimensions of the outlet of the sorting machine, in order to reduce to a minimum the risk of sorting errors due to the inevitable differences in the delivery trajectories and permits the volume of the final package to be minimised by making the dimensions of the packaging as close as possible to the dimensions of the objects themselves and reduces the cost of the packing materials used to complete the filling.

An expert in the sector could then provide different forms of execution of the solution idea which must, however, all be considered to fall within the scope of this invention.

## Claims

1. Devices for collecting and stacking objects unloaded from a sorting equipment of the type comprising multiple conveyor surfaces moving along a fixed path and actuated to off-load the objects transported onto collection devices located along the path, characterised by the fact of providing an inclined tray with lateral stopping and support walls, onto which the objects are off-loaded.

2. Devices according to claim 1, characterised by the fact that the said tray is mounted on means which are suitable for controlling its lowering so that the upper level of the objects off-loaded onto it is kept constant.

3. Devices according to claim 2, characterised by the fact of having a photoelectric cell suitable for checking the presence of an object on the tray and supplying a signal which causes the lowering of the tray for an amount sufficient to clear the field of the said photoelectric cell.

4. Devices according to the preceding claims, characterized by the fact of being provided with limit mecroswitches actioned by said collectio tray objects.

5. Devices according to the preceding claims, characterised by the fact of being provided with an intermediate rotating mat arranged between the said collecting devices and the sorting equipment, said mat receiving the objects from the sorter and off-loading them onto the collection devices.

6. Collection devices according to the previous claims, characterised by the fact of providing the final container of the off-loaded objects arranged on the said collection tray, the said container being constituted by a box consisting of two parts which can be inserted into one another, arranged on the collection tray to accept the objects off-loaded.

7. Collection devices according to claims 1 to 5, characterised by the fact that the final container is constituted by a box with accordion pleated walls so that they can be tightened around the off-loaded objects to minimise the volume of the finalpack.

8. Devices to collect and stack objects off-loaded from a sorting machine, as described and illustrated.

FIG.1

FIG.2